# EUROPEAN PATENT APPLICATION

(11) **EP 4 818 532 A1**
(43) Date of publication of application: **07.10.2026**
(21) Application number: 26160672.7
(22) Date of filing: 25.02.2026
(51) Int. Cl.: F15B 13/08, F16K 27/00

(54) **VALVE DEVICE**

(30) Priority: 04.04.2025 JP 2025062506
(71) Applicant: Comtesco Corporation, Fuwa-gun, Gifu-ken 503-2100 (JP)
(72) Inventor: Tanimoto, Sumihito, Chiyoda-ku, Tokyo, 102-0093 (JP)
(74) Representative: Grünecker Patent- und Rechtsanwälte PartG mbB

(57) **Abstract**

One object is to minimize an increase in the size of a valve device including a pressure sensor. The valve device (10) includes: a mounting wall (22B) mounted to an installation wall (204); a first port (31) connected to an actuator (101); a second port (32) open to the mounting wall (22B); a spool chamber (51) that houses a spool (60); a first relay passage (33) and a second relay passage (34) connecting the first and second ports (31, 32) to the spool chamber (51); a pressure sensor (81) configured to sense a pressure of hydraulic oil in the second port (32); and a first leg (27) protruding from the mounting wall (22B). The pressure sensor (81) is located on the second port (32) so as to protrude from the mounting wall (22B).

## Description

### TECHNICAL FIELD

The present invention relates to a valve device.

### BACKGROUND

The valve device disclosed in Patent Literature 1 includes a housing and a spool. The housing has a passage leading to an actuator, a passage leading to a pump, and a passage leading to a tank. The spool is housed in the housing. The spool is movable within the housing. In accordance with the position of the spool, the communication state between the passage leading to the actuator and the other two passages is switched.

Patent Literature 1: Japanese Patent Application Publication No. Hei 6-193604

### SUMMARY

In techniques such as the one disclosed in the Patent Literature 1, a pressure sensor may be installed in the valve device to sense the pressure of the hydraulic oil flowing in the passage leading to the actuator. In this case, it is desirable to minimize the increase in the size of the valve device.

A valve device for overcoming the above drawback comprises: a mounting wall mounted to an installation object; a first port connected to an actuator; a second port open to the mounting wall; a spool and a spool chamber that houses the spool; a supply and discharge passage connecting the first and second ports to the spool chamber; a pressure sensor configured to sense a pressure of hydraulic oil in the supply and discharge passage; and at least one leg protruding from the mounting wall, wherein the pressure sensor is located on the second port so as to protrude from the mounting wall.

In the above configuration, there is a vacant space between the installation object and the mounting wall with a height equal to the protruding length of the leg. This vacant space contains a portion of the pressure sensor that protrudes from the mounting wall. This arrangement minimizes the increase in the size of the valve device, as compared to arrangement in which the pressure sensor protrudes from a different location than the mounting wall.

Supposing that the supply and discharge passage is a first supply and discharge passage, and the pressure sensor is a first pressure sensor, the valve device may further comprise: a third port connected to the actuator; a fourth port open to the mounting wall; a second supply and discharge passage connecting the third and fourth ports to the spool chamber; and a second pressure sensor configured to sense a pressure of hydraulic oil in the second supply and discharge passage, wherein the second pressure sensor may be located on the fourth port so as to protrude from the mounting wall.

The valve device may be configured such that the at least one leg comprises a pair of legs, wherein in a direction of arrangement of the first and second pressure sensors, the first and second pressure sensors may be located in the middle, and the pair of legs may be located on both sides of the first and second pressure sensors.

The valve device may further comprise: a pump port connected to a pump that discharges hydraulic oil; a pump passage connecting the spool chamber to the pump port; and a check valve that prohibits hydraulic oil from flowing from the spool chamber through the pump passage to the pump port, wherein in the direction of arrangement, the check valve may be located between the first and second pressure sensors and protrude from the mounting wall.

The valve device may further comprise: a plurality of valve units, each being a component including the mounting wall, the first and second ports, the spool and the spool chamber, the supply and discharge passage, and the pressure sensor, the plurality of valve units being arranged along a direction orthogonal to a protruding direction of the at least one leg, wherein the plurality of valve units may include at least two first valve units and at least one second valve unit, the at least two first valve units may each have the at least one leg, and the at least one second valve unit may be located between the at least two first valve units and may not have the at least one leg.

The valve device may be configured such that the at least one second valve unit comprises a plurality of second valve units. The valve device may further comprise: a power supply line including a common line connected to a power source, a plurality of branch connectors located on the common line, and branch lines connecting each of the plurality of branch connectors to the pressure sensor, wherein each of the branch connectors may be mounted to the mounting wall of different one of the plurality of second valve units.

The valve device may further comprise: a pilot valve for adjusting a pilot pressure acting on the spool, wherein the at least one leg may have a bolt hole recessed from a protruding end surface of the at least one leg, and the bolt hole may serve to mount the valve device to the installation object, and wherein the pilot valve may include a movable portion located between the spool chamber and the bolt hole in an extension of an axis of the bolt hole.

### ADVANTAGEOUS EFFECTS

The above technical idea can minimize the increase in the size of the valve device including a pressure sensor.

### BRIEF DESCRIPTION OF THE DRAWINGS

Fig. 1 is a plan view of a valve device.
Fig. 2 is a sectional view along the arrows II-II in Fig. 1.
Fig. 3 is a plan view of the valve device as viewed from the opposite side than in Fig. 1.

### DESCRIPTION OF THE PREFERRED EMBODIMENTS

### <Overall Configuration>

One embodiment of a valve device will be described below, using an example case where the valve device is applied to a construction machine. For simplicity and clarity of description, the components shown in the drawings are depicted schematically, and the components shown in the drawings are not necessarily depicted to a fixed scale.

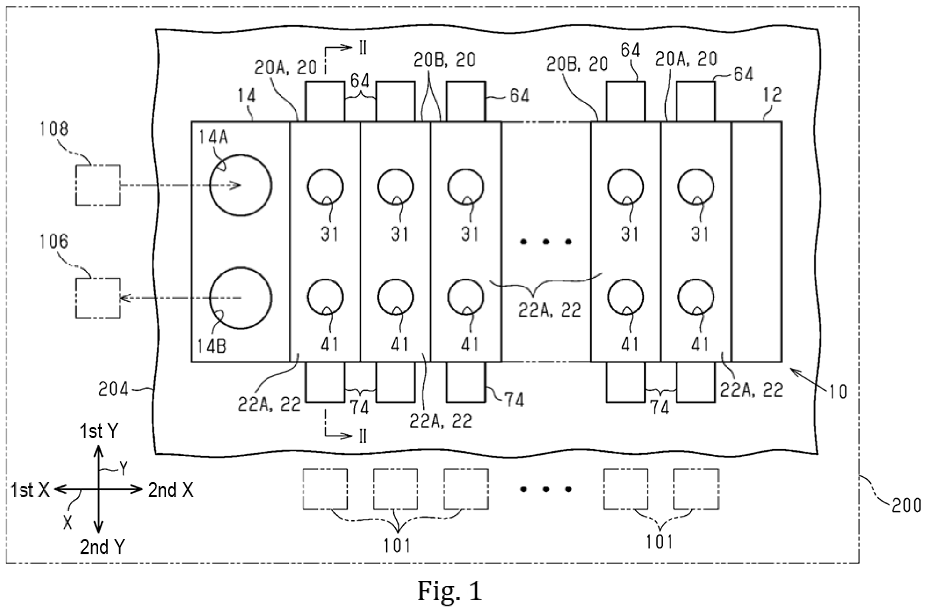

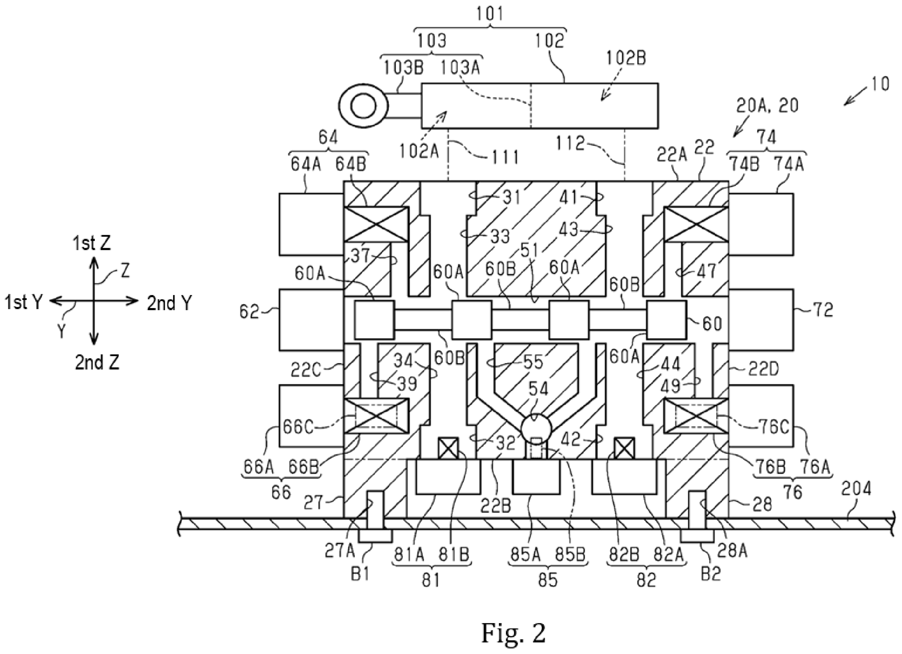

As shown in Fig. 1, an excavator 200, serving as a construction machine, includes a plurality of actuators 101. The actuators 101 are hydraulic drive devices. As shown in Fig. 2, each of the actuators 101 includes a cylinder 102 and a piston rod 103. The cylinder 102 is shaped like a hollow column. The piston rod 103 includes a piston 103A located inside the cylinder 102, and a rod 103B extending from the piston 103A and protruding outside the cylinder 102. The piston 103A divides the interior of the cylinder 102 into two sections. As a result, the interior of the cylinder 102 is partitioned into a first oil chamber 102A and a second oil chamber 102B. The portion of the rod 103B that is located outside the cylinder 102 is mounted to a driven object. Examples of the driven object include a boom, arm, or attachment in the excavator 200. The piston rod 103 moves in accordance with the hydraulic pressure of the hydraulic oil supplied to and discharged from the first oil chamber 102A and the second oil chamber 102B. Simultaneously, the piston rod 103 moves the driven object.

As shown in Fig. 1, the excavator 200 includes a tank 106, a pump 108, and a valve device 10. The tank 106 stores the hydraulic oil. The pump 108 discharges the hydraulic oil from the tank 106. The valve device 10 is located on the flowing path of the hydraulic oil from the pump 108 to the tank 106. The valve device 10 distributes the hydraulic oil supplied by the pump 108 to each actuator 101 and merges the hydraulic oil discharged from each actuator 101 to return it to the tank 106.

The valve device 10 includes a control unit 12, a base unit 14, and a plurality of valve units 20. Both the control unit 12 and the base unit 14 as a whole are shaped like a rectangular parallelepiped. Details of the control unit 12 and the base unit 14 will be described below.

The plurality of valve units 20 are located between the control unit 12 and the base unit 14. The valve units 20 are arranged in a row between the control unit 12 and the base unit 14. The valve units 20, the control unit 12, and the base unit 14 are fixed to each other and are integrated together. Hereafter, the direction in which the base unit 14 is located as viewed from the control unit 12 will be referred to as the first X direction. The direction opposite to the first X direction will be referred to as the second X direction. The first X direction and the second X direction will be collectively referred to as the X direction. The X direction is the direction in which the plurality of valve units 20 are arranged. One of the particular directions orthogonal to the X direction will be referred to as the first Y direction, and the other will be referred to as the second Y direction. The first Y direction and the second Y direction will be collectively referred to as the Y direction. As shown in Fig. 2, one of the directions orthogonal to both the Y and X directions will be referred to as the first Z direction, and the other will be referred to as the second Z direction. The first Z direction and the second Z direction will be collectively referred to as the Z direction. In the second Z direction with respect to the valve device 10, there is located an installation wall 204 on which the valve device 10 is installed. As shown in Fig. 1, when the valve device 10 is viewed toward the second Z direction, the area of the installation wall 204 is larger than the area of the entire valve device 10.

The valve units 20 are provided for each actuator 101. The valve units 20 include first valve units 20A and second valve units 20B. In this embodiment, there are two first value units 20A. The two first valve units 20A are located at both ends of the group of the valve units 20. A plurality of second valve units 20B are located between these two first valve units 20A. The following first describes the structure of the first valve units 20A, followed by the second valve units 20B.

### <Housing>

As shown in Fig. 2, the first valve unit 20A includes a housing 22. The housing 22 as a whole has a rectangular parallelepiped shape. Among the outer walls of the housing 22, the wall that faces in the first Z-direction constitutes the top wall 22A. Among the outer walls of the housing 22, the wall that faces in the second Z-direction constitutes the mounting wall 22B. The mounting wall 22B is opposed to an installation wall 204. Among the outer walls of the housing 22, the wall that faces in the first Y-direction constitutes the first side wall 22C. Among the outer walls of the housing 22, the wall that faces in the second Y-direction constitutes the second side wall 22D. The outer walls of the housing 22 can be regarded as the outer surface of the housing 22.

The housing 22 has a spool chamber 51. The spool chamber 51 is constituted by a hole penetrating the housing 22. The spool chamber 51 is located approximately at the middle in the Z-direction within the housing 22. The spool chamber 51 as a whole extends straight in the Y direction. The spool chamber 51 is open to both the first and second side walls 22C and 22D.

The housing 22 has a first port 31. The first port 31 is positioned in the first Z direction relative to the spool chamber 51. The first port 31 is positioned in the first Y direction relative to the middle of the housing 22 in the Y direction. The first port 31 is a passage defined in the housing 22. The first port 31 is open to the top wall 22A. The first port 31 is connected to the first oil chamber 102A of the actuator 101 via a first connection passage 111. The first connection passage 111 is formed of piping and is fixed to the top wall 22A. Although detailed explanations are omitted, each port described below is a passage defined in the housing 22, as is the first port 31.

The housing 22 has a first relay passage 33. The first relay passage 33 is located between the first port 31 and the spool chamber 51. The first relay passage 33 connects the first port 31 and the spool chamber 51. The first relay passage 33 as a whole extends straight in the Z direction. In Fig. 2, the passage sectional area of the first relay passage 33 is drawn larger than that of the first port 31 for convenience.

The housing 22 has a second port 32. The second port 32 is generally symmetrical with the first port 31 across the spool chamber 51. The second port 32 is open to the mounting wall 22B.

The housing 22 has a second relay passage 34. The second relay passage 34 is located between the second port 32 and the spool chamber 51. The second relay passage 34 connects the second port 32 and the spool chamber 51. The second relay passage 34 as a whole extends straight in the Z direction. The second relay passage 34 is located on generally the same straight line as the first relay passage 33. **In** Fig. 2, the passage sectional area of the second relay passage 34 is drawn larger than that of the second port 32 for convenience. The second relay passage 34, together with the first relay passage 33, constitutes a first supply and discharge passage. The first supply and discharge passage connects the first and second ports 31 and 32 to the spool chamber 51.

The housing 22 has a first tank passage 37 and a first tank port. Fig. 2. does not show the first tank port. The first tank passage 37 is positioned in the first Z direction relative to the spool chamber 51. The first tank passage 37 is positioned in the first Y direction relative to the first relay passage 33. The first tank passage 37 connects the spool chamber 51 and the first tank port. The first tank port penetrates the housing 22 in the X direction. The first tank port is connected to the tank 106 via the base unit 14.

The housing 22 has a first pilot passage 39. The first pilot passage 39 is positioned in the second Z direction relative to the spool chamber 51. The first pilot passage 39 is positioned in the first Y direction relative to the second relay passage 34. One end of the first pilot passage 39 is connected to the spool chamber 51.

The housing 22 is symmetrical across the middle in the Y direction. The housing 22 has passages positioned in the second Y direction relative to the middle in the housing 22 that are paired with the ports and passages described above. Specifically, the housing 22 has a third port 41, a third relay passage 43, a fourth port 42, and a fourth relay passage 44 that are paired with the first port 31, the first relay passage 33, the second port 32, and the second relay passage 34. The housing 22 also has a second tank passage 47, a second tank port, and a second pilot passage 49 that are paired with the first tank passage 37, the first tank port, and the first pilot passage 39. The following is a brief description of the configuration of the ports and the passages located in the second Y direction relative to the middle in the housing 22.

The third port 41 is open to the top wall 22A. The third port 41 is connected to the second oil chamber 102B of the actuator 101 via a second connection passage 112. The third relay passage 43 connects the third port 41 and the spool chamber 51. The fourth port 42 is open to the mounting wall 22B. The fourth relay passage 44 connects the fourth port 42 and the spool chamber 51. The fourth relay passage 44, together with the third relay passage 43, constitutes a second supply and discharge passage. The second supply and discharge passage connects the third and fourth ports 41 and 42 to the spool chamber 51. The second tank passage 47 connects the spool chamber 51 and the second tank port (not shown). The second tank port is connected to the tank 106 via the base unit 14. The second pilot passage 49 is connected to the spool chamber 51.

The housing 22 has a pump passage 55 and a pump port 54. The pump passage 55 is positioned in the second Z direction relative to the spool chamber 51. The pump passage 55 is located between the second relay passage 34 and the fourth relay passage 44. The pump passage 55 includes a common passage, a first branch passage, and a second branch passage. The common passage is open to the mounting wall 22B. The first and second branch passages branch at the end of the common passage opposite to the opening of the mounting wall 22B. The first and second branch passages are connected to different points in the spool chamber 51. The end of the common passage opposite to the opening of the mounting wall 22B is connected to the pump port 54. The pump port 54 penetrates the housing 22 in the X direction. The pump port 54 is connected to the pump 108 via the base unit 14.

### <Other Components>

The first valve unit 20A includes a spool 60. The spool 60 is housed in the spool chamber 51. The spool 60 has a plurality of land portions 60A and a plurality of coupling shafts 60B. For example, in the present embodiment, there are four land portions 60A. There are three coupling shafts 60B. The four land portions 60A are spaced apart from each other. The coupling shafts 60B each couple adjacent ones of the land portions 60A. The land portions 60A are each shaped like a circular column. The coupling shafts 60B are each shaped like a circular column having a smaller diameter than the land portions 60A. The central axis of the land portions 60A substantially coincides with the central axis of the coupling shafts 60B. The spool 60 can reciprocate within the spool chamber 51. The spool 60 moves within the spool chamber 51 to switch the flow path of the hydraulic oil.

The first valve unit 20A includes a first relief valve 64. The first relief valve 64 is mounted to the first side wall 22C. The first relief valve 64 includes a first portion 64A located outside the housing 22 and a second portion 64B located inside the housing 22. The first relief valve 64 is positioned in the first Z direction relative to the spool chamber 51. The first relief valve 64 opens and closes the first tank passage 37. Simultaneously, the first relief valve 64 switches the communication and shutoff between the first tank passage 37 and the first tank port.

The first valve unit 20A includes a second relief valve 74. The second relief valve 74 is mounted to the second side wall 22D. The second relief valve 74 has the same configuration as the first relief valve 64, but is installed for the second tank passage 47. The second relief valve 74 includes a first portion 74A located outside the housing 22 and a second portion 74B located inside the housing 22. The second relief valve 74 switches the communication and shutoff between the second tank passage 47 and the second tank port.

The first valve unit 20A includes a first cover 62 and a second cover 72. The first cover 62 is mounted to the first side wall 22C. The first cover 62 covers the opening of the spool chamber 51 in the first sidewall 22C. The second cover 72 is mounted to the second side wall 22D. The second cover 72 covers the opening of the spool chamber 51 in the second side wall 22D. Although not shown in the drawings, the first cover 62 and the second cover 72 contain springs, for example. The springs exert a biasing force on the spool 60.

The first valve unit 20A includes a first pilot valve 66. The first pilot valve 66 is a pilot-operated electromagnetic proportional valve. The first pilot valve 66 is mounted to the first side wall 22C. The first pilot valve 66 is positioned in the second Z direction relative to the spool chamber 51. The first pilot valve 66 includes a first portion 66A located outside the housing 22 and a second portion 66B located inside the housing 22. The second portion 66B includes a movable portion 66C. Through the movement of the movable portion 66C, the first pilot valve 66 introduces pilot pressure into the spool chamber 51 via the first pilot passage 39. The pilot pressure acts on the spool 60 in the spool chamber 51 to move the spool 60. The first pilot valve 66 adjusts the level of the pilot pressure.

The first valve unit 20A includes a second pilot valve 76. The second pilot valve 76 is mounted to the second side wall 22D. The second pilot valve 76 has the same configuration as the first pilot valve 66, but is installed for the second pilot passage 49. The second pilot valve 76 includes a first portion 76A located outside the housing 22 and a second portion 76B located inside the housing 22. The second portion 76B includes a movable portion 76C. The second pilot valve 76 introduces pilot pressure into the spool chamber 51 via the second pilot passage 49. The second pilot valve 76 adjusts the level of the pilot pressure that acts on the spool 60 in the spool chamber 51.

The first valve unit 20A includes a first pressure sensor 81. The first pressure sensor 81 is mounted to the mounting wall 22B. The first pressure sensor 81 is positioned in the first Y direction relative to the middle of the housing 22 in the Y direction. The first pressure sensor 81 includes a first portion 81A located outside the housing 22 and a second portion 81B located inside the housing 22. The first portion 81A is mounted to the mounting wall 22B. The first portion 81A protrudes in the second Z direction from the mounting wall 22B toward the installation wall 204. The second portion 81B is located in the second port 32. Thus, the first pressure sensor 81 is provided such that the first portion 81A protrudes from the mounting wall 22B and the second portion 81B is located in the second port 32. The first pressure sensor 81 senses the pressure of the hydraulic oil in the second port 32. The pressure of the hydraulic oil in the second port 32 is approximately the same as the pressure of the hydraulic oil in the second relay passage 34, the first relay passage 33, and the first port 31. The pressure of the hydraulic oil in the first port 31 is approximately the same as the pressure of the hydraulic oil in the first oil chamber 102A of the actuator 101. Thus, the first pressure sensor 81 substantially senses the pressure of the hydraulic oil in the first oil chamber 102A through sensing of the pressure of the hydraulic oil in the first supply and discharge passage.

The first valve unit 20A includes a second pressure sensor 82. The second pressure sensor 82 is mounted to the mounting wall 22B. The second pressure sensor 82 has the same configuration as the first pressure sensor 81, but is installed for the fourth port 42. Specifically, the second pressure sensor 82 has the same outer shape and dimensions as the first pressure sensor 81. The second pressure sensor 82 includes a first portion 82A located outside the housing 22 and a second portion 82B located inside the housing 22. As with the first pressure sensor 81, the second pressure sensor 82 is provided such that the first portion 82A protrudes from the mounting wall 22B toward the installation wall 204 and the second portion 82B is located in the fourth port 42. The second pressure sensor 82 senses the pressure of the hydraulic oil in the fourth port 42. The pressure of the hydraulic oil in the fourth port 42 is approximately the same as the pressure of the hydraulic oil in the fourth relay passage 44, the third relay passage 43, and the third port 41. The pressure of the hydraulic oil in the third port 41 is approximately the same as the pressure of the hydraulic oil in the second oil chamber 102B of the actuator 101. Thus, the second pressure sensor 82 substantially senses the pressure of the hydraulic oil in the second oil chamber 102B through sensing of the pressure of the hydraulic oil in the second supply and discharge passage. As with the alignment of the fourth port 42 with the second port 32, the second pressure sensor 82 is aligned with the first pressure sensor 81 in the Y direction. Thus, the Y direction corresponds to the alignment direction of the first and second pressure sensors 81 and 82.

The first valve unit 20A includes a check valve 85. The check valve 85 is mounted to the mounting wall 22B. In the Y direction, the check valve 85 is located between the first and second pressure sensors 81 and 82. The check valve 85 includes a first portion 85A located outside the housing 22 and a second portion 85B located inside the housing 22. The first portion 85A is mounted to the mounting wall 22B. The first portion 85A protrudes in the second Z direction from the mounting wall 22B toward the installation wall 204. The second portion 85B is located in the common passage of the pump passage 55. The check valve 85 prohibits the hydraulic oil from flowing from the spool chamber 51 through the pump passage 55 to the pump port 54. The dimension of the first portion 85A of the check valve 85 with respect to the Z-direction is approximately the same as the dimension of the first portion 81A of the first pressure sensor 81 with respect to the Z-direction.

### <Legs>

The first valve unit 20A includes a pair of legs, a first leg 27 and a second leg 28. The first leg 27 and the second leg 28 protrude from the mounting wall 22B in the second Z direction. In this embodiment, the first leg 27 and the second leg 28 are formed integrally with the housing 22. Fig. 2 shows, for convenience, a two-dot chain line at the boundary between the mounting wall 22B and the first leg 27. The same applies to the boundary between the mounting wall 22B and the second leg 28.

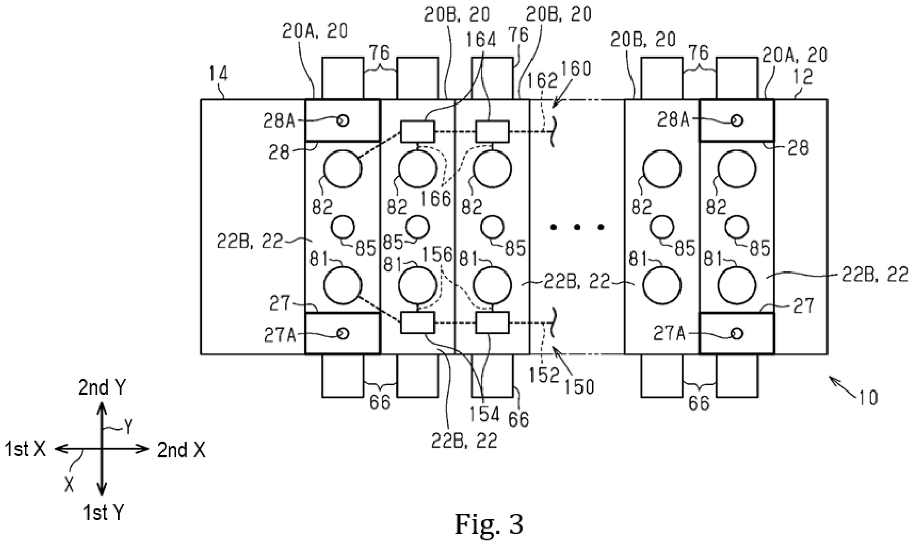

The first leg 27 is positioned at the end of the mounting wall 22B in the first Y direction. The first leg 27 is positioned in the first Y direction relative to the first pressure sensor 81. The first leg 27 is located at substantially the same position as the first pressure sensor 81 in the X direction. The first leg 27 is shaped like a rectangular parallelepiped. As shown in Fig. 3, the end of the first leg 27 in the first Y direction is located at substantially the same position as the end of the housing 22 in the first Y direction. The end of the first leg 27 in the first X direction is located at substantially the same position as the end of the housing 22 in the first X direction. The end of the first leg 27 in the second X direction is located at substantially the same position as the end of the housing 22 in the second X direction. Fig. 3 shows, for convenience, the first leg 27 with a thick solid line. As shown in Fig. 2, the dimension of the first leg 27 with respect to the Z direction is larger than the dimension of the first portion 81A of the first pressure sensor 81 with respect to the Z direction. Thus, the protruding length of the first leg 27 from the mounting wall 22B is larger than the protruding length of the first pressure sensor 81 from the mounting wall 22B. Similarly, the protruding length of the first leg 27 from the mounting wall 22B is larger than the protruding length of the second pressure sensor 82 from the mounting wall 22B.

The second leg 28 is positioned at the end of the mounting wall 22B in the second Y direction. The second leg 28 is positioned in the second Y direction relative to the second pressure sensor 82. The second leg 28 is located at substantially the same position as the second pressure sensor 82 in the X direction. Thus, in the Y direction, the first leg 27 and the second leg 28 are located on both sides of the first pressure sensor 81 and the second pressure sensor 82, with the first pressure sensor 81 and the second pressure sensor 82 in the middle. In this embodiment, the shape and dimensions of the second leg 28 are substantially the same as those of the first leg 27. As shown in Fig. 3, the second leg 28 is aligned with the respective ends of the housing 22 in the second Y direction, first X direction, and second X direction. Fig. 3 shows, for convenience, the second leg 28 with a thick solid line. As shown in Fig. 2, the protruding length of the second leg 28 from the mounting wall 22B is larger than the protruding length of the second pressure sensor 82 from the mounting wall 22B. Similarly, the protruding length of the second leg 28 from the mounting wall 22B is larger than the protruding length of the first pressure sensor 81 from the mounting wall 22B.

The first leg 27 has a bolt hole 27A. The bolt hole 27A is recessed in the first Z direction from the protruding end surface of the first leg 27. The protruding end surface of the first leg 27 is the surface of the first leg 27 that faces the installation wall 204. The bolt hole 27A serves to mount the first valve unit 20A and thus the valve device 10 to the installation wall 204. The bolt hole 27A is contoured like a circular column. The axis of the bolt hole 27A extends through the movable portion 66C of the first pilot valve 66. The bolt hole 27A receives a bolt B1 that penetrates the installation wall 204. The bolt B1 is fixed to the bolt hole 27A. Since the bolt B1 is fixed to the bolt hole 27A, the first leg 27 is mounted to the installation wall 204.

The second leg 28 has the same bolt hole 28A as the first leg 27. The bolt hole 28A is recessed in the first Z direction from the protruding end surface of the second leg 28. The axis of the bolt hole 28A extends through the movable portion 76C of the second pilot valve 76. The bolt hole 28A receives a bolt B2 that penetrates the installation wall 204. The second leg 28 is mounted to the installation wall 204 through the bolt B2.

As mentioned above, the first leg 27 and the second leg 28 are mounted to the installation wall 204. The first leg 27 and the second leg 28 protrude from the mounting wall 22B. Thus, the mounting wall 22B is mounted to the installation wall 204 through the first leg 27 and the second leg 28. Because of the positional relationship between the bolt hole 27A and the first pilot valve 66 described above, the movable portion 66C of the first pilot valve 66 is located between the spool chamber 51 and the bolt hole 27A in the extension of the axis of the bolt hole 27A. Similarly, the movable portion 76C of the second pilot valve 76 is positioned between the spool chamber 51 and the bolt hole 28A in the extension of the axis of the bolt hole 28A.

### <Second Valve Units>

As shown in Fig. 3, the second valve units 20B do not have the legs described for the first valve units 20A. Except for this point, the configuration of the second valve units 20B is the same as that of the first valve units 20A. A plurality of second valve units 20B are located between the two first valve units 20A. The group of valve units 20 including the second valve units 20B and the first valve units 20A are arranged in a row along the X direction. The X direction is orthogonal to the Z direction in which the first leg 27 and the second leg 28 protrude from the mounting wall 22B in the first valve units 20A. Thus, the plurality of valve units 20 are arranged along a direction orthogonal to the direction in which the first leg 27 and the second leg 28 protrude from the mounting wall 22B.

As described above, each of the valve units 20 is a component that includes the housing 22 with the mounting wall 22B, the first port 31 and the second port 32, the spool 60 and the spool chamber 51, the first supply and discharge passage, and the first pressure sensor 81. Furthermore, each of the valve units 20 is a component that includes the third port 41 and the fourth port 42, the second supply and discharge passage, and the second pressure sensor 82. In addition, each of the valve units 20 is a component that also includes the pump passages 55, the pump ports 54, the tank passages, the tank ports, the pilot passages, the pilot valves, the relief valves, the check valves 85, and so on.

As mentioned above, each valve unit 20 has the pump port 54, the first tank port, and the second tank port that penetrate the housing 22 in the X direction. Although not shown in the figure, the pump ports 54 of adjacent valve units 20 are connected to each other. Similarly, the first tank ports of adjacent valve units 20 are connected to each other. Similarly, the second tank ports of adjacent valve units 20 are connected to each other.

As shown in Fig. 1, the base unit 14 has a base pump passage 14A and a base tank passage 14B. The base pump passage 14A is connected to the pump 108 via piping or other passages. The base pump passage 14A is connected to the pump port 54 of the first valve unit 20A located at the end in the first X direction. The base tank passage 14B is connected to the tank 106 via piping or other passages. The base tank passage 14B is connected to both the first and second tank ports of the first valve unit 20A located at the end in the first X direction.

### <Electrical System>

As shown in Fig 3, the valve device 10 includes a first power supply line 150. The first power supply line 150 includes a first common line 152, a plurality of first branch connectors 154, and a plurality of first branch lines 156.

The first common line 152 is located between the mounting wall 22B of each valve unit 20 and the installation wall 204. The first common line 152 as a whole is located in the first Y direction relative to the first pressure sensors 81 of the plurality of second valve units 20B. Although not shown in the drawings, one end of the first common line 152 is connected to the control unit 12. The other end of the first common line 152 is connected to the first pressure sensor 81 of the first valve unit 20A located at the end in the first X direction. The first common line 152 supplies power to this first pressure sensor 81.

The plurality of first branch connectors 154 are located midway along the first common line 152. The first branch connectors 154 are spaced apart from each other. The first branch connectors 154 are provided for each of the second valve units 20B. Each of the first branch connectors 154 is mounted to the mounting wall 22B of a different second valve unit 20B. The first branch connector 154 is located in the first Y direction relative to the first pressure sensor 81 of the associated second valve unit 20B. Thus, the first branch connector 154 is located opposite the check valve 85 across the first pressure sensor 81.

The first branch lines 156 are provided for each of the second valve units 20B. The first branch lines 156 connects, for each second valve unit 20B, the first branch connector 154 to the first pressure sensor 81. In other words, the first branch lines 156 individually connect each of the first branch connectors 154 and each of the first pressure sensors 81 of the second valve units 20B. The first branch lines 156 supply power from the first common line 152 to the first pressure sensors 81 via the first branch connectors 154.

Although not shown in the drawings, the first power supply line 150 includes a power line connecting the first pressure sensor 81 of the first valve unit 20A located at the end in the second X direction, to the control unit 12. As shown in Fig 3, the valve device 10 includes a second power supply line 160. The second power supply line 160 includes a second common line 162, a plurality of second branch connectors 164, and a plurality of second branch lines 166. The second power supply line 160 has the same configuration as the first power supply line 150, and is installed for the second pressure sensors 82 of the valve units 20. The second power supply line 160 is symmetrical with the first power supply line 150 across the middle of the valve device 10 in the Y direction.

Although not shown in the drawings, the valve device 10 includes signal lines. The signal lines are provided for each of the first pressure sensors 81 of the valve units 20. The signal lines are also provided for each of the second pressure sensors 82 of the valve units 20. The signal lines are connected to the control unit 12. The first and second pressure sensors 81 and 82 of each valve unit 20 transmit the sensing information to the control unit 12 via the signal lines.

### <Operation of Embodiment>

The control unit 12 is a computer with a processing circuit. The processing circuit includes a CPU and a memory. The memory stores in advance various programs that describe the processes to be executed by the CPU. The processing circuit includes a communication circuit for wireless communication with an external device. The control unit 12 also serves as a power source to supply power to each pressure sensor.

The control unit 12 controls each of the actuators 101. In effect, the control unit 12 controls the first relief valve 64, second relief valve 74, first pilot valve 66, and second pilot valve 76 of each valve unit 20. The control unit 12 controls the objects of control based on sensing signals from the first pressure sensor 81 and second pressure sensor 82 of each valve unit 20, as well as command signals transmitted from a higher level.

An example of the control operation performed by the control unit 12 is described for one valve unit 20. The control unit 12 adjusts the pilot pressure acting on the spool 60 through controlling the first pilot valve 66 and the second pilot valve 76. Thus, the control unit 12 moves the spool 60. While moving the spool 60, the control unit 12 controls the first relief valve 64 and the second relief valve 74. The control unit 12 switches the communication and shutoff between the first tank passage 37 and the first tank port through the control of the first relief valve 64. The control unit 12 also switches the communication and shutoff between the second tank passage 47 and the second tank port through the control of the second relief valve 74.

The control unit 12 switches between the following two modes for the flowing path of the hydraulic oil by moving the spool 60. In the first mode, the pump passage 55 is allowed to communicate with the first relay passage 33, and the first tank passage 37 is shut off from the first relay passage 33. Furthermore, in the first mode, the pump passage 55 is shut off from the third relay passage 43, and the second tank passage 47 is allowed to communicate with the third relay passage 43. Thus, in the first mode, the hydraulic oil in the pump passage 55 is supplied through the first relay passage 33 and the first port 31 to the first oil chamber 102A of the actuator 101. In the first mode, on the other hand, the hydraulic oil in the second oil chamber 102B of the actuator 101 is discharged through the third port 41 and the third relay passage 43 to the second tank passage 47.

In the second mode, the pump passage 55 is shut off from the first relay passage 33, and the first tank passage 37 is allowed to communicate with the first relay passage 33. Furthermore, in the second mode, the pump passage 55 is allowed to communicate with the third relay passage 43, and the second tank passage 47 is shut off from the third relay passage 43. Thus, in the second mode, the hydraulic oil in the pump passage 55 is supplied through the third relay passage 43 and the third port 41 to the second oil chamber 102B of the actuator 101. In the second mode, on the other hand, the hydraulic oil in the first oil chamber 102A of the actuator 101 is discharged through the first port 31 and the first relay passage 33 to the first tank passage 37.

### <Advantageous Effects of Embodiment>

(1) The valve device 10 of this embodiment has the first leg 27 and the second leg 28 protruding from the mounting wall 22B of the housing 22. The first leg 27 and the second leg 28 are needed for the purposes such as securing the wall thickness for the bolt holes. With the legs protruding from the mounting wall 22B, there is a vacant space between the mounting wall 22B and the installation wall 204 with a height equal to the protruding length of the first leg 27 from the mounting wall 22B. In the valve device 10 of this embodiment, this vacant space contains the first portion 81A of the first pressure sensor 81 that protrudes from the mounting wall 22B. This arrangement of the first pressure sensor 81 using the vacant space minimizes the increase in the size of the valve device 10, as compared to arrangement in which the first pressure sensor 81 protrudes from a different location than the mounting wall 22B. This description of the first pressure sensor 81 also applies to the second pressure sensor 82.
(2) The valve device 10 of this embodiment has the first pressure sensor 81 dedicated to the first oil chamber 102A and the second pressure sensor 82 dedicated to the second oil chamber 102B. Installing the pressure sensors dedicated to each oil chamber makes it possible to sense the pressure of the hydraulic oil in each oil chamber with high accuracy. This is effective for highly accurate position adjustment of the piston rod 103 in the actuator 101.
(3) In the valve device 10 of this embodiment, the first and second pressure sensors 81 and 82 are located in a middle, and the first leg 27 and second leg 28 are located on both sides of the first and second pressure sensors 81 and 82. In this arrangement, the first and second pressure sensors 81 and 82 can be protected by the first and second legs 27 and 28 with respect to the Y direction. For example, suppose that some object moves closer to the valve device 10 toward the first pressure sensor 81 from outside in the first Y direction. At this time, the object hits the first leg 27 before hitting the first pressure sensor 81. Thus, the object can be prevented from contacting the first pressure sensor 81. This description of the first leg 27 and the first pressure sensor 81 also applies to the second leg 28 and the second pressure sensor 82.
(4) In the valve device 10 of this embodiment, the check valve 85 is located in the vacant space between the installation wall 204 and the mounting wall 22B, as with the first and second pressure sensors 81 and 82, This minimizes the increase in the size of the valve device 10. Also, with the check valve 85 located between the first and second legs 27 and 28, the check valve 85 can be protected by the first and second legs 27 and 28, as in section (3) above.
(5) In the valve device 10 of this embodiment, some of the plurality of valve units 20 are constituted by a second valve unit 20B, which does not have legs. Providing the second valve unit 20B makes the following possible. Because of the absence of legs, the vacant space between the mounting wall 22B of the second valve unit 20B and the installation wall 204 is larger than the vacant space between the mounting wall 22B of the first valve unit 20A and the installation wall 204. This larger space can be used as a space for other objects. For example, in this embodiment, the space created by the absence of legs in the second valve unit 20B is used as the space for the first power supply line 150 and the second power supply line 160. In this arrangement, the wiring fits better than in an arrangement in which the first power supply line 150 and the second power supply line 160 run so as to protrude outward from the valve units 20.
(6) In the valve device 10 of this embodiment, a plurality of second valve units 20B are arranged between the two first valve units 20A. In this arrangement, the distance between the two first valve units 20A is longer. This stabilizes the support of the valve unit 10 by a pair of legs in one of the two first valve units 20A and a pair of legs in the other.
(7) In the valve device 10 of this embodiment, a plurality of first branch lines 156 are branched from the first common line 152 to supply power to the first pressure sensors 81 of the valve units 20. In this arrangement, the number of long wires can be reduced, compared to an arrangement in which each of the first pressure sensors 81 is connected to the control unit 12 by a separate wire. This improves routing of the wires. This description of the first power supply line 150 also applies to the second power supply line 160.
(8) In the valve device 10 of this embodiment, the movable portion 66C of the first pilot valve 66 is located between the spool chamber 51 and the bolt hole 27A. In such arrangement, if the wall thickness between the movable portion 66C and the bolt hole 27A is excessively small, distortion of the surrounding walls caused by tightening of the bolt B1 may prevent the movable portion 66C from moving smoothly, or other defects may occur. For example, the distortion of the walls surrounding the bolt B1 may cause distortion of the case that forms an outline of the second portion 66B, which in turn retards movement of the movable portion 66C located inside the case. If the above wall thickness is reduced by reducing the length of the bolt hole 27A, the fastening force of the bolt B1 will be reduced, which may cause instability in mounting the valve device 10 to the installation wall 204.

In this regard, the valve device 10 of this embodiment has the bolt hole 27A in the first leg 27 protruding from the mounting wall 22B. In this arrangement, the wall thickness between the movable portion 66C and the bolt hole 27A is larger because of the presence of the first leg 27, so both the above-mentioned defects and instability of the mounting state are less likely to occur. This description of the first leg 27 and the first pilot valve 66 also applies to the second leg 28 and the second pilot valve 76.

### <Modification Examples>

The above embodiment can be modified as described below. The above embodiment and the following modification examples can be implemented in combination to the extent where they are technically consistent to each other.

The positional relationship between the bolt hole 27A in the first leg 27 and the first pilot valve 66 is not limited to the example in the above embodiment. Specifically, it is not required that the movable portion 66C of the first pilot valve 66 be located in the extension of the axis of the bolt hole 27A. The same applies to the positional relationship between the bolt hole 28A in the second leg 28 and the second pilot valve 76.

The configuration of the first power supply line 150 is not limited to the example in the above embodiment. The first power supply line 150 can have any configuration to supply power of the power source to the first pressure sensors 81. For example, a single first branch connector 154 may be provided and connected to the plurality of first branch lines 156 and thus to the plurality of first pressure sensors 81. This description of the first power supply line 150 also applies to the second power supply line 160.

The power source is not limited to the example in the above embodiment. A power supply separate from the control unit 12 may be provided. The overall configuration of the valve device 10 is not limited to the example in the above embodiment. For example, the number of first valve units 20A and the number of second valve units 20B may be changed from the example in the above embodiment. A single second valve unit 20B may be provided, or no second valve unit 20B may be provided. Three or more first valve units 20A may be provided. The valve device 10 should include one or more first valve units 20A. The arrangement order of the first valve units 20A and the second valve units 20B may be changed from the example in the above embodiment. A first valve unit 20A may be located in the middle of a line of multiple second valve units 20B. A component such as the base unit 14, which has a different function than the valve units 20, may be provided in the middle of a line of multiple valve units 20. A plurality of components having different functions than the valve units 20 may be provided in the valve device 10. The valve device 10 may have any configuration to distribute the hydraulic oil pumped by the pump 108 to each actuator 101 and return the hydraulic oil discharged from each actuator 101 to the tank 106.

The control unit 12 may be treated as a component separate from the valve device 10. Thus, it is not required that the valve device 10 include the control unit 12. The same applies to the base unit 14.

The configuration of the valve units 20 is not limited to the example in the above embodiment. The valve units 20 may have any configuration to accomplish supply and discharge of the hydraulic oil required for the actuator 101. For example, in the valve units 20, one of the first pressure sensor 81 and the second pressure sensor 82 may be eliminated. The arrangement, direction of extension, number, and other characteristics of the passages defined in the housing 22 may be changed from the example in the above embodiment. Simultaneously, the locations of the valves paired with the passages may be changed. For example, the pump passage 55 and the pump port 54 may be positioned in the first Z direction relative to the spool chamber 51. Simultaneously, the check valve 85 may be mounted to the top wall 22A. In the Z direction, the positions of the first tank passage 37 and the first pilot passage 39 may be interchanged. Simultaneously, in the Z direction, the positions of the first relief valve 64 and the first pilot valve 66 may be interchanged. The valve units 20 should include the mounting wall 22B, which is mounted to the installation wall 204, the first port 31 and the second port 32, the spool 60 and the spool chamber 51, the first supply and discharge passage, and the first pressure sensor 81.

The shape of the housing 22 is not limited to the example in the above embodiment. Specifically, the housing 22 is not limited to a rectangular parallelepiped. The housing 22 may have any shape in which necessary passages can be defined.

The installation object is not limited to the example in the above embodiment. The installation object is not necessarily a flat wall. The installation object may be any mating member on which the valve device 10 needs to be installed, and is not limited to a wall.

The actuator 101 is not limited to the example in the above embodiment. The actuator 101 may be any component operated hydraulically. The number of legs in the first valve units 20A is not limited to the example in the above embodiment. One or more legs should be provided. When the valve device 10 includes a plurality of first valve units 20A, the number of legs need not be the same in all the first valve units 20A. The number of legs may be different for each first valve unit 20A, or the number of legs may be different in some of the plurality of first valve units 20A than in others.

The shape of the first leg 27 is not limited to the example in the above embodiment. In changing the shape of the first leg 27 from the example in the above embodiment, it is preferable to satisfy the condition that the protruding length of the first leg 27 from the mounting wall 22B is larger than or equal to the protruding length of the pressure sensor from the mounting wall 22B. This description of the first leg 27 also applies to the second leg 28.

The arrangement of the legs on the mounting wall 22B is not limited to the example in the above embodiment. Specifically, it is not required that the first leg 27 and the second leg 28 be positioned on both sides of the pressure sensor located in the middle in the Y direction. For example, the first leg 27 and the second leg 28 may be located at different positions in the X direction.

It is not required that the first leg 27 have a bolt hole 27A. When the bolt hole 27A is eliminated from the first leg 27, the mounting wall 22B can be mounted to the installation object using other structures. The first leg 27 could also be used for applications other than providing the bolt hole 27A, for example, for machining purposes in forming the passages. This description of the first leg 27 also applies to the second leg 28.

It is not required that the first leg 27 be integrated with the housing 22. The first leg 27 may be fabricated in advance separately from the housing 22, and the first leg 27 may be mounted to the mounting wall 22B in a later process. This description of the first leg 27 also applies to the second leg 28.

When the valve unit 10 includes the valve units 20 and a component having a different function than the valve units 20, the surface of the component having the different function than the valve units 20 facing the installation wall 204 may be treated as a mounting wall. The legs may then protrude from this mounting wall. In this arrangement, the valve units 20 do not need to have legs.

The object on which the valve device 10 is installed is not limited to the excavator 200. The object on which the valve device 10 is installed may be a construction machine other than the excavator 200, or it may be other than construction machines. The valve device 10 does not need to be installed on something, but it only needs to be mounted to the installation object.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions are distributively provided. Some or all of the functions may be integrated. Any one of the functions may be partly or entirely segmented into a plurality of functions, which are distributively provided. Irrespective of whether the functions are integrated or distributed, they are acceptable as long as they are configured to attain the object of the invention.

### REFERENCE SIGNS LIST

- 10: valve device
- 20: valve unit
- 20A: first valve unit
- 20B: second valve unit
- 22B: mounting wall
- 27: first leg
- 27A: bolt hole
- 28: second leg
- 28A: bolt hole
- 31: first port
- 32: second port
- 33: first relay passage (first supply and discharge passage)
- 34: second relay passage (first supply and discharge passage)
- 41: third port
- 42: fourth port
- 43: third relay passage (second supply and discharge passage)
- 44: fourth relay passage (second supply and discharge passage)
- 54: pump port
- 55: pump passage
- 51: spool chamber
- 60: spool
- 66: first pilot valve
- 66C: movable portion
- 76: second pilot valve
- 76C: movable portion
- 81: first pressure sensor
- 82: second pressure sensor
- 85: check valve
- 150: first power supply line
- 152: first common line
- 154: first branch connector
- 156: first branch line
- 160: second power supply line
- 162: second common line
- 164: second branch connector
- 166: second branch line
- 101: actuator
- 204: installation wall

## Claims

1. A valve device (10) comprising:
a mounting wall (22B) mounted to an installation object (204);
a first port (31) connected to an actuator (101);
a second port (32) open to the mounting wall (22B);
a spool (60) and a spool chamber (51) that houses the spool (60);
a supply and discharge passage (33, 34) connecting the first and second ports (31, 32) to the spool chamber (51);
a pressure sensor (81) configured to sense a pressure of hydraulic oil in the supply and discharge passage (33, 34); and
at least one leg (27) protruding from the mounting wall (22B),
wherein the pressure sensor (81) is located on the second port (32) so as to protrude from the mounting wall (22B).

2. The valve device (10) of claim 1,
wherein supposing that the supply and discharge passage (33, 34) is a first supply and discharge passage (33, 34), and the pressure sensor (81) is a first pressure sensor (81), the valve device (10) further comprises:
a third port (41) connected to the actuator (101);
a fourth port (42) open to the mounting wall (22B);
a second supply and discharge passage (43, 44) connecting the third and fourth ports (41, 42) to the spool chamber (51); and
a second pressure sensor (82) configured to sense a pressure of hydraulic oil in the second supply and discharge passage (43, 44), and
wherein the second pressure sensor (82) is located on the fourth port (42) so as to protrude from the mounting wall (22B).

3. The valve device (10) of claim 2,
wherein the at least one leg (27) comprises a pair of legs (27, 28), and
wherein in a direction of arrangement of the first and second pressure sensors (81, 82), the first and second pressure sensors (81, 82) are located in a middle, and the pair of legs (27, 28) are located on both sides of the first and second pressure sensors (81, 82).

4. The valve device (10) of claim 2 or 3, further comprising:
a pump port (54) connected to a pump (108) that discharges hydraulic oil;
a pump passage (55) connecting the spool chamber (51) to the pump port (54); and
a check valve (85) that prohibits hydraulic oil from flowing from the spool chamber (51) through the pump passage (55) to the pump port (54),
wherein in the direction of arrangement, the check valve (85) is located between the first and second pressure sensors (81, 82) and protrudes from the mounting wall (22B).

5. The valve device (10) of any one of the preceding claims, further comprising:
a plurality of valve units (20), each being a component including the mounting wall (22B), the first and second ports (31, 32), the spool (60) and the spool chamber (51), the supply and discharge passage (33, 34), and the pressure sensor (81), the plurality of valve units (20) being arranged along a direction orthogonal to a protruding direction of the at least one leg (27),
wherein the plurality of valve units (20) include at least two first valve units (20A) and at least one second valve unit (20B), the at least two first valve units (20A) each have the at least one leg (27), and the at least one second valve unit (20B) is located between the at least two first valve units (20A) and does not have the at least one leg (27).

6. The valve device (10) of claim 5, wherein the at least one second valve unit (20B) comprises a plurality of second valve units (20B).

7. The valve device (10) of claim 6, further comprising:
a power supply line (150) including a common line (152) connected to a power source, a plurality of branch connectors (154) located on the common line (152), and branch lines (156) connecting each of the plurality of branch connectors (154) to the pressure sensor (81),
wherein each of the branch connectors (154) is mounted to the mounting wall (22B) of different one of the plurality of second valve units (20B).

8. The valve device (10) of any one of the preceding claims, further comprising:
a pilot valve (66) for adjusting a pilot pressure acting on the spool (60),
wherein the at least one leg (27) has a bolt hole (27A) recessed from a protruding end surface of the at least one leg (27), and the bolt hole (27A) serves to mount the valve device to the installation object (204), and
wherein the pilot valve (66) includes a movable portion (66C) located between the spool chamber (51) and the bolt hole (27A) in an extension of an axis of the bolt hole (27A).
